# EUROPEAN PATENT APPLICATION

(11) **EP 1 480 483 A2**
(43) Date of publication of application: **24.11.2004**
(21) Application number: 04012107.1
(22) Date of filing: 21.05.2004
(51) Int. Cl.: H04Q 7/38, H04L 12/28

(54) **Location sensing system and method using packets asynchronously transmitted between wireless stations**

(30) Priority: 23.05.2003 JP 2003145778
(71) Applicant: NEC CORPORATION, Tokyo (JP)
(72) Inventor: Ishii, Kenichi, Minato-ku, Tokyo (JP)
(74) Representative: Glawe, Delfs, Moll & Partner

(57) **Abstract**

In a communication system, a location server is provided for receiving a location request. A plurality of base stations whose locations are predetermined are connected to the location server. In response to the location request, the system determines a round-trip propagation delay time of packets asynchronously transmitted over a wireless channel between each of the base stations and a target mobile station, calculates the distances from the round-trip propagation delay times, and estimates the location of the mobile station from an intersection of a plurality of circles whose radii are equal to the distances and whose centers respectively coincide with the locations of the base stations. The location server returns a location report to the requesting source for indicating the location of the mobile station.

## Description

### BACKGROUND OF THE INVENTION

### Field of the Invention

The present invention relates generally to wireless packet communication systems, and more specifically to location sensing system and method for sensing the location of a target wireless station in a packet communication system, such as IEEE 802.11 wireless LAN in which wireless stations share a common wireless channel for transmission/reception of packets in an asynchronous mode.

### Description of the Related Art

Wireless LAN (local area network) systems have been developed for high speed packet transmission. IEEE 802.11 wireless LAN is standardized as a representative of the wireless LAN systems (Wireless LAN Medium Access Control and Physical Layer Specifications, ISO/ IEC 8802-11:1999 Edition). IEEE 802.11a and 802.11b are available as options of the physical layer of IEEE 802.11 (Wireless LAN Medium Access Control and Physical Layer Specifications: High-speed Physical Layer in the 5 GHz Band, ISO / IEC 8802-11:1999 / Amd 1:2000 Edition and Wireless LAN Medium Access Control and Physical Layer Specifications: High-speed Physical Layer Extension in the 2.4 GHz Band, ANSI/IEEE Std 802.11, 1999 Edition).

In the standardized wireless LAN system, a plurality of mobile stations share a common wireless channel (or link) with a base station using an access method known as CSMA/ CA (Carrier Sense Multiple Access with Collision Avoidance) for transmission of packets in an asynchronous mode. There is no common time base in the wireless LAN system.

On the other hand, a number of technical papers have recently been published for sensing the location of a mobile station in IEEE 802.11 wireless LAN systems. One of the technical papers "Location Sensing and Privacy in a Context-aware Computing Environment" (Asim Smailagic et al., IEEE wireless communications, Volume 9, Issue 5, October 2002) describes a location sensing technique in which the RSSIs (Received Signal Strength Indicators) of signals from a target mobile station are measured and compared with a reference RSSI for identifying the location of the mobile station. However, the RSSI method produces results which vary significantly with different environment of the target mobile station and hence the reliability is low.

Another technical paper "Wireless LAN Integrated Access System - a study of location sensing system" (Institute of Electronics Communications Engineers of Japan (2003 General Meeting, B-5-203, March 2003) ) describes a technique based on TDOA or TOA (time of arrival) for measuring signal's propagation delay time. Although high reliability is guaranteed, synchronization must be established between the mobile stations and the base station.

### SUMMARY OF THE INVENTION

It is therefore an object of the present invention to provide a location sensing system and method for an asynchronous wireless packet communication system such as IEEE 802.11 LAN by measuring a round-trip propagation delay time of packets asynchronously transmitted between wireless stations whose locations are known and a target wireless station whose location is unknown.

In the general terms, the location sensing system of the present invention comprises a plurality of first wireless stations whose locations are known, means for measuring a plurality of propagation delay times of packets asynchronously transmitted over wireless channels between the first wireless stations and a second wireless station whose location is unknown, means for determining, from the round-trip propagation delay times, a plurality of distances travelled by the packets between the first wireless stations and the second wireless station, and means for estimating the location of the second wireless station from an intersection of a plurality of circles whose radii are equal to the distances and whose centers respectively coincide with the locations of the location-known wireless stations.

According to one aspect, the present invention provides a communication system comprising a location server for receiving a location request and transmitting a location report for indicating an estimated location of a target wireless station as a reply to the location request, a plurality of wireless stations whose locations are known, first means responsive to the location request for measuring a round-trip propagation delay time of packets asynchronously transmitted over a wireless channel between each of the location-known wireless stations and the target wireless station, second means for determining a plurality of distances from the round-trip propagation delay times, and third means for determining the location of the target wireless station from an intersection of a plurality of circles whose radii are equal to the distances and whose centers respectively coincide with the locations of the location-known wireless stations.

In a first embodiment, the first means is provided in each of the location-known wireless stations and the second and third means are provided in the location server. In a second embodiment, the first and second means are provided in each of the location-known wireless stations and the third means is provided in the location server. In a third embodiment, the first means is provided in the target wireless station and the second and third means are provided in the location server. In a fourth embodiment, the first and second means are provided in the target wireless station and the third means is provided in the location server. In a fifth embodiment, the first, second and third means are provided in the target wireless station.

According to another aspect, the present invention provides a method of detecting the location of a target wireless station in a wireless communication network, wherein the network comprises a plurality of wireless stations of which the locations are known and with which the target wireless station is capable of establishing a wireless channel. The method comprises the steps of (a) receiving a location request, (b) measuring a round-trip propagation delay time of packets asynchronously transmitted over a wireless channel between each of the location-known wireless stations and the target wireless station, (c) determining a plurality of distances from the round-trip propagation delay times, (d) estimating the location of the target wireless station from an intersection of a plurality of circles whose radii are equal to the distances and whose centers respectively coincide with the locations of the location-known wireless stations, and (e) transmitting a location report for indicating the estimated location of the target wireless station as a reply to the location request.

### BRIEF DESCRIPTION OF THE DRAWINGS

The present invention will be described in detail further with reference to the following drawings, in which:
Fig. 1 is a block diagram of a mobile communications network of the present invention;
Figs. 2 to 5 are timing diagrams for describing a number of methods for measuring a round-trip propagation delay time of packets asynchronously transmitted between two wireless stations;
Fig. 6 is an illustration for describing a method of identifying the location of a target mobile station using three base stations;
Fig. 7 is an illustration for describing a method of identifying the location of a target mobile station using two base stations;
Fig. 8 is an illustration for describing a method of determining wave propagation patterns within a partitioned indoor space;
Fig. 9 is a block diagram of a typical wireless LAN interface for illustrating points of measurements for round-trip propagation delay;
Fig. 10 is a schematic block diagram of the mobile network in which a wireless LAN mobile station is shown operating in a wireline mode;
Fig. 11 is a block diagram of the location server of Fig. 10;
Fig. 12 is a flowchart of the operation of the location server according to a first embodiment of the present invention;
Fig. 13 is a block diagram of a base station of the present invention;
Fig. 14 is a flowchart of the operation of the base station according to the first embodiment of this invention;
Fig. 15 is a flowchart of the operation of the location server according to a second embodiment of the present invention;
Fig. 16 is a flowchart of the operation of the base station according to the second embodiment of this invention;
Fig. 17 is a flowchart of the operation of the location server according to a third embodiment of the present invention;
Fig. 18 is a block diagram of the mobile station of Fig. 10;
Fig. 19 is a flowchart of the operation of the location server according to the third embodiment of the present invention;
Fig. 20 is a flowchart of the operation of the location station according to a fourth embodiment of this invention;
Fig. 21 is a flowchart of the operation of the mobile station of Fig. 10 according to the fourth embodiment of the present invention;
Fig. 22 is a flowchart of the operation of the location server according to a fifth embodiment of the present invention; and
Fig. 23 is a flowchart of the operation of the mobile station of Fig. 10 according to the fifth embodiment of this invention.

### DETAILED DESCRIPTION

The following is a description of this invention which estimates the geographic location of a mobile station of a wireless LAN communication network. The location of the mobile station is estimated by a location server according to the IEEE 802.11 standards based on information supplied from a number of base stations.

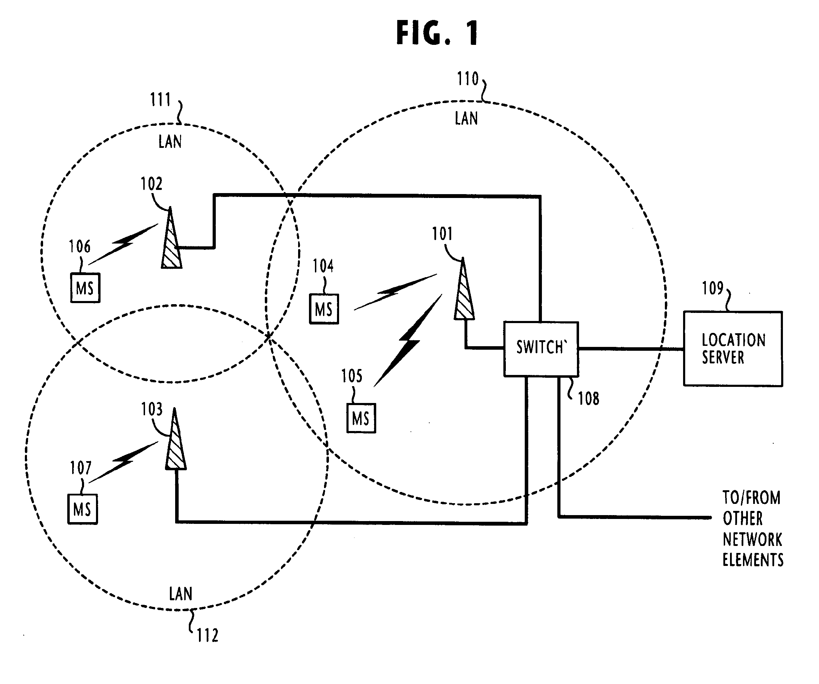

As illustrated in Fig.1, the wireless LAN communication network is comprised of a plurality of cell areas (or wireless LAN systems) 110, 111 and 112 respectively covered by wireless LAN base stations 101, 102 and 103. In each of the LAN systems, wireless LAN mobile stations share a common channel with the serving LAN base station.

Through respective landlines, these base stations are connected to a switch 108 to which the location server 109 is connected. In the coverage areas, information signals from mobile stations 104 ~ 107 are interchanged by the switch 108 or switched through to other networks. By way of the switch 108 the location server 109 accesses the base stations to obtain measurement signals for location estimation. Note that the coverage areas are partially overlapped with each other so that a mobile-transmitted signal may be simultaneously detected by more than one base station.

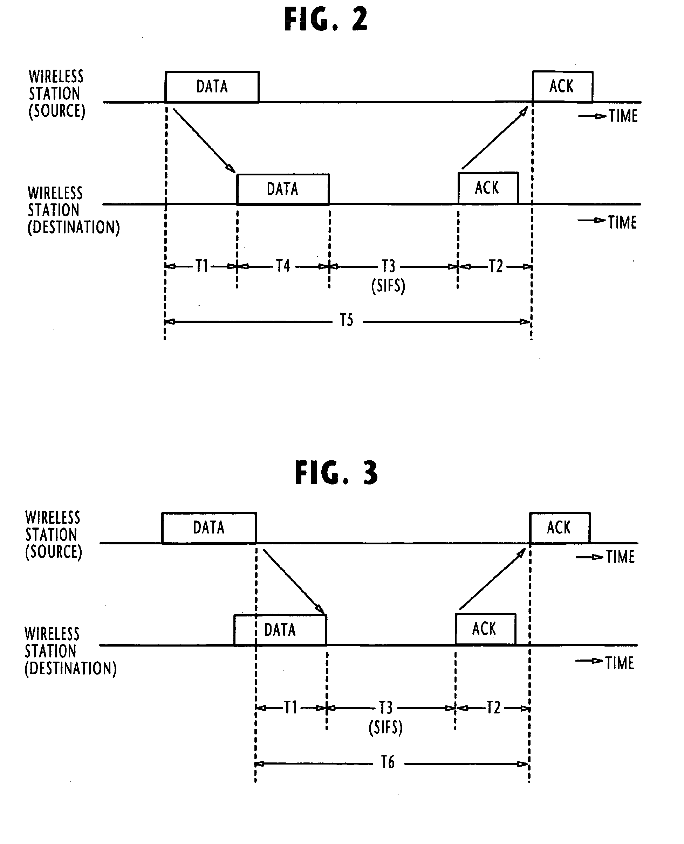

Using the standardized DCF (Distributed Coordination Function) or PCF (Point Coordination Function) access method, the location server 109 specifies a base station and a mobile station and instructs one of the specified wireless stations to perform transmission and reception of asynchronous packets between the base station and the mobile station, or between a source-site wireless station and a destination-site wireless station and determine their round-trip propagation delay time, as will be described with reference to Figs. 2 to 5. Note that the measurement of the round-trip propagation delay time between a base station and a mobile station may be performed by the base or mobile station at periodic intervals without instructions from the location server 108. In this case, the measured data is stored in a database and averaged by using an appropriate statistics method.

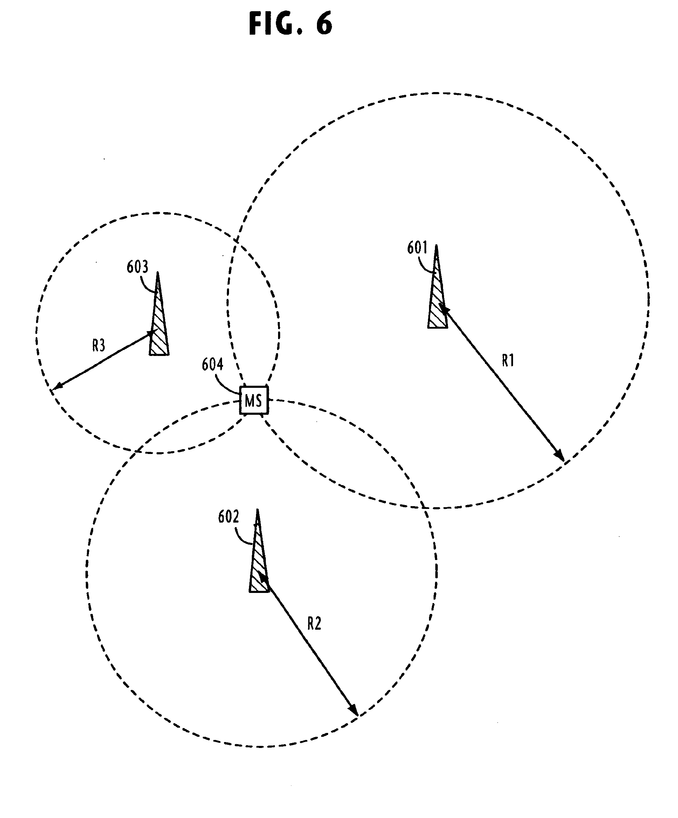

Propagation delay times between the mobile station and a number of base stations are determined and converted to distance values. Geographic location of the mobile station is determined from the distances from the mobile station to the base stations, as will be described with reference to Figs. 6 to 8.

As shown in Fig. 2, if the DCF access method is used, a source-site wireless station specified by the location server 109 transmits a unicast data packet (frame) of duration T4 (which is determined by the packet length and the transmission rate). The packet is then received by a destination-site wireless station a delay time T1 following its transmission from the source site. The station at the destination site checks the transmitted packet for possible errors within a predetermined interval of time T3, known as "Short InterFrame Space" which is typically 16 microseconds, and verifies the packet if it contains no errors and returns an acknowledgment packet to the source site. The source site receives the acknowledgment packet a delay time T2 following its transmission from the destination site. The total time T5 (= T1 + T2 + T3 + T4) is measured between the beginning of the transmitted data packet and the beginning of the received acknowledgment packet. Since T3 and T4 are known, they are subtracted from the measured total time T5 to determine the round-trip propagation delay time (T1 + T2). Since T1 and T2 can be considered equal to each other, the propagation delay time T = T1 = T2 is given by (T1 + T2)/ 2. By multiplying the delay time T by the velocity of light, the distance between the two wireless stations is estimated.

If the source station fails to receive an acknowledgment packet within a specified period of time, the source station retransmits a copy of the data packet to the destination station to measure the round-trip propagation delay time. Alternatively, if the destination station receives a data packet in error, it requests the source station to retransmit a copy of the data packet to the destination station to all the source station to measure the round-trip propagation delay time.

Note that the DCF access method can also be applied to a RTS-CTS-Data packet-ACK sequence procedure by treating a Request-To-Send packet as a data packet and treating a Clear-To-Send packet as an acknowledgment packet as described above. In such a case, the total time interval T6 is measured between the end of transmission of an RTS packet from the source site and the start of reception of a CTS packet from the destination site.

As shown in Fig. 3, the total time T6 (= T1 + T2 + T3) can be measured between the end of the transmitted data packet and the beginning of the received acknowledgment packet. Since the duration T4 of Fig. 3 is not included in the delay time calculation, it is not necessary to take the packet length and the transmission rate of the data packet into consideration.

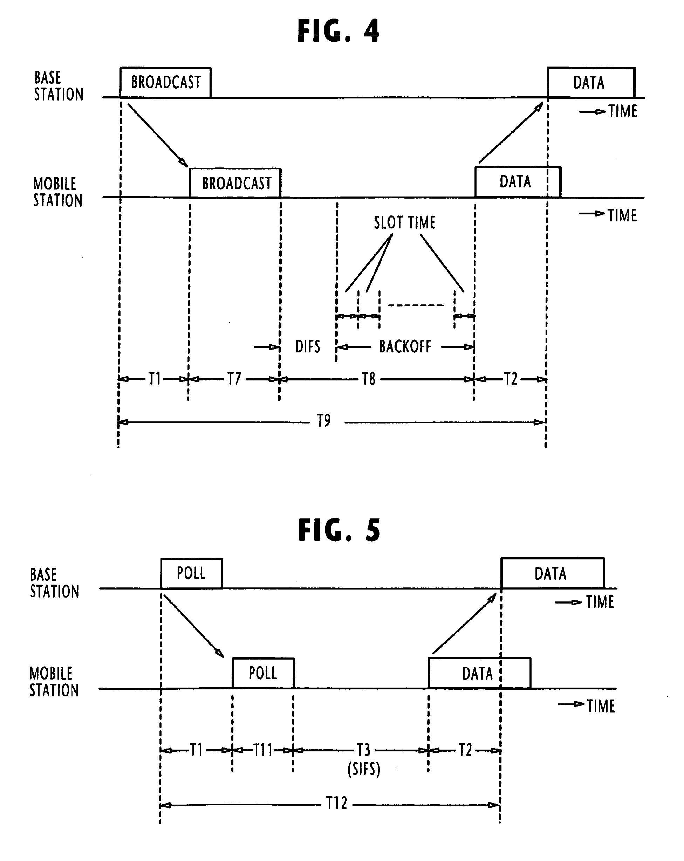

A further DCF access method is shown in Fig. 4 in which a mobile station desiring to send a data packet receives a broadcast packet of duration T7 a delay time T1 following its transmission from a base station. On receiving the broadcast packet, the mobile station transmits the data packet after waiting a predetermined interval of time T8 which equals the sum of a fixed interval known as DIFS (DCF InterFrame Space) and a random time known as Backoff window (or Contention window). DIFS is the time in which the wireless channel is set in idle state and is equal to SIFS plus twice the slot time. On the other hand, the Backoff window is equal to the slot time multiplied by integer n, where the slot time is determined by the physical layer (typically 9 microseconds if IEEE 802.11a is used) and the integer n is of random value.

The base station receives the data packet a delay time T2 following its transmission from the mobile terminal. The total delay time T9 between the start of the transmitted broadcast packet and the start of the received data packet is measured. Since the Backoff window is determined by the slot time and the slot time is determined by whether the physical layer is designed according to IEEE 802.11a or 802.11b, the Backoff window varies with different physical layers. If the IEEE 802.11a physical layer is used, the slot time is 9 microseconds, which corresponds to a distance of 2,700 meters. Since the coverage area of each wireless LAN base station has a radius of several hundreds meters, it is not likely that the round-trip propagation delay time T1 + T2 between a base station and a mobile station exceeds this slot time. The Backoff window is obtained as follows. Assume that T10 = T9 - T7 - DIFS, hence T10 = T1 + T2 + Backoff window. By dividing T10 by the slot time, setting the random integer n equal to the quotient of the division and multiplying the slot time by the quotient. If the physical layer of IEEE 802. 11b is used, the slot time is 20 microseconds. If T10 is equal to 161 microseconds, the integer n is calculated as n = 8. Hence the Backoff window is equal to 160 µs (=20 µs x 8). The round-trip propagation delay T1+T2 is equal to 1 µs (=161 µs - 160 µs).

If the RTS-CTS sequence is used in the DCF access method of Fig. 4, the total time T9 begins with the start of transmission of a broadcast packet and ends with the start of reception of a RTS packet. According to the DCF access method specified by IEEE 802.11, the transmission of a RTS packet or a data packet (not following a RTS-CTS sequence) begins after the interval DIFS + Backoff window has lapsed, regardless of whether a broadcast packet has been received or not. Accordingly, the round-trip propagation delay time between two wireless stations can be determined by measuring the time interval between the start or end timing of an acknowledgment packet from the source site and the reception of a subsequent RTS or data packet by the destination site.

If the location server 108 employs the PCF access method, a base station broadcasts a polling packet of duration T11 that uniquely specifies a mobile terminal as shown in Fig. 5. When a mobile terminal receives the polling packet, it examines its destination address. If it recognizes that it is being targeted, the mobile station must wait the interval SIFS before transmitting a data packet to the base station. The total time interval T12 is measured between the start timing of the transmitted polling packet and the start timing of the data packet received by the base station. The round-trip propagation delay T1 + T2 is obtained by subtracting (T11 + SIFS) from the measured time interval T12.

The IEEE 802.11 standard allows base stations to transmit a polling packet and a data packet in rapid succession and allows mobile stations to transmit an acknowledgment packet and a data packet in rapid succession. In either case, the propagation delay time can be estimated by measuring the interval between the start or end timing of a packet transmitted from the base station and the start timing of a packet transmitted from the mobile station.

Fig. 6 illustrates a simplified network for determining the position of a mobile station 604 located at distances (radii) R1, R2 and R3 from three wireless LAN base stations 601, 602 and 603, respectively. The location of the mobile station 604 is identified as the intersection of three circles of radii R1, R2 and R3, whose centers coincide with the locations of base stations 601, 602 and 603, respectively. If these base stations are located in respective buildings, their locations are treated as positions in a three-dimensional space, and each of these three circles is treated as part of a sphere. The location of the mobile station is identified by the intersection of the three part-spherical surfaces.

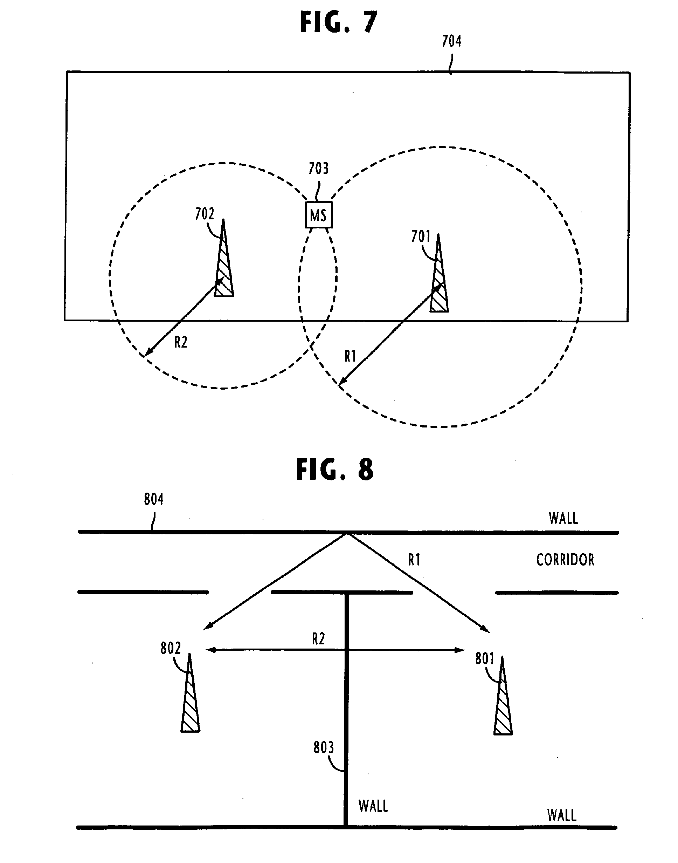

As shown in Fig. 7, if a mobile station 703 is located in a building 704 where only two base stations 701 and 702 are provided, the distance measurement results in two circles with radii R1 and R2 and the location of the mobile station 704 is identified at one of two candidate intersections of these two circles. If the other candidate point of intersections is outside of the building 704, the true intersection point can be determined by the use of database representing the architectures (or floor plans) of city's buildings, if the building 704 is a high-rise building and the mobile station is on an elevated floor, or the building 704 is electromagnetically shielded to prevent access from the outside.

Possibility exists that the distance measured according to one of the above-discussed methods is the length of a path travelled by a wireless signal and may differ from a line-of-sight distance if the path is lengthened by reflections from an object such as the wall and partition of a building. As illustrated in Fig. 8, if a base station 801 and a mobile station 802 are separated from each other by an electromagnetically shielded wall 803, the wireless signal would take a longer path R1 due to reflection from a wall 804 than a line-of-sight path R2 it would otherwise take if the wall 803 is not provided. To eliminate the possible differences, line-of-sight distances are measured between a base station and a number of mobile's possible locations and corresponding path lengths of wireless signal are measured using the above-mentioned propagation delay time. The measured path lengths are mapped in a database to the corresponding line-of-sight distances for converting path-length data obtained from the network to a corresponding line-of-sight distance.

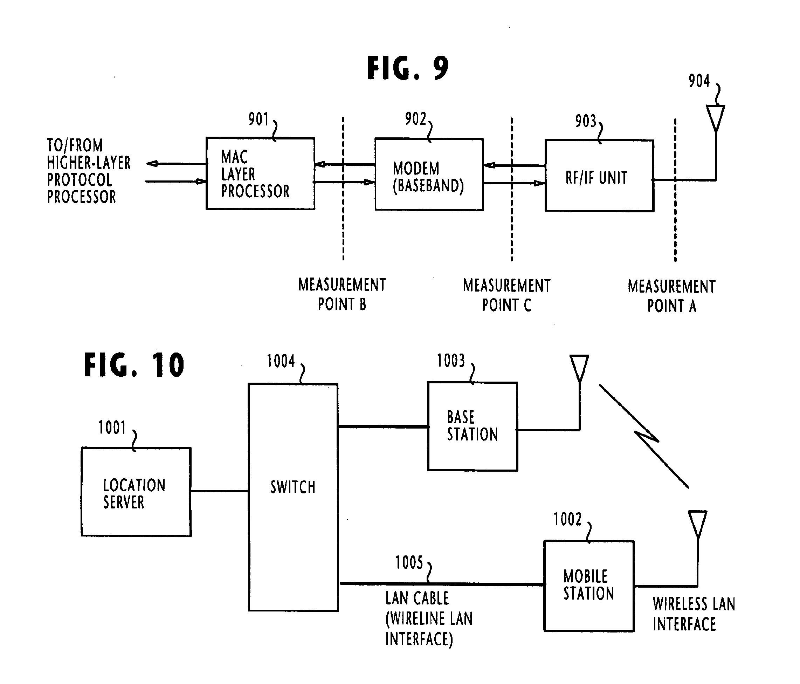

Fig. 9 illustrates measurement points of a typical wireless LAN mobile station for measuring the above-mentioned propagation delay times T5, T6, T9 and T12 and the correction of possible errors associated with the measurement. The mobile station has a MAC (media access control) layer processor 901 that provides interfaces to an upper layer protocol processor, not shown, a modem (modulator/ demodulator) 902 and an RF (radio frequency)/IF (intermediate frequency) unit 903 connected to antenna 904. As described above, the propagation delay time is measured between the start or end timing of a packet transmission and the start timing of a packet reception. Although the point A is theoretically ideal, it is difficult to use it for detecting such timing events. Instead, the point B or C is used for this purpose. Since the processing of a high-frequency signal in analog circuitry such as the modem 902 and RF/IF unit 903 takes some length of time and represents a measurement error, it is preferable to subtract the delay time between the antenna 904 and either point B or C from the measured propagation delay time T1 + T2. Such a processing delay time may be determined by using a known distance between two wireless stations and subtracting the propagation delay time corresponding to the known distance from the propagation delay time actually measured between these stations. The difference value between these propagation delay times is detected as a measurement error and stored in a memory in the location server or base stations. In order to cancel the processing delay time of the analog high-frequency circuitry when a propagation delay time is measure, the stored difference value is read from the memory and subtracted from the measured propagation delay time.

Although the periods T3 and T8 (i.e., from the end timing of a packet reception to the start timing of a packet transmission) can be calculated by counting the number of slot times, there is variability in the operating performance of implemented electronic circuits depending on their configuration. Hence, the actual T3 and T8 deviate from the calculated T3 and T8, and another distance error results. Since the delay-time deviation of implemented circuitry is dependent on its circuit configuration, and since different manufacturers use different circuit configurations, the deviation of a circuit from the IEEE 802. 11 can be determined uniquely by its manufacturer's identity or product identity. A plurality of such identities are mapped to corresponding delay-time deviations in a memory in the location server or base stations. If the location server (or a base station) obtains the manufacturers or product identity of a mobile station, the server looks up the memory and determines the corresponding delay-time deviation involved in the periods T3 and T8 of the mobile station. The manufacturer's or product identity of a mobile station can be obtained from its MAC address or from MIB (Management Information Base) obtained by SNMP (Simple Network Management Protocol). Alternatively, a plurality of manufacturer's identities and product identities are mapped to a plurality of mobile's MAC addresses and IP addresses in a memory of the location server or base stations. When a round-trip propagation delay time between a mobile station and a base station is measured, the delay-time error due to product variations is cancelled by reading the corresponding delay-time deviation from the memory and subtracting it from the measured delay time.

Another method of detecting and correcting an error associated with wireless communication circuits of two wireless stations is shown in Fig. 10. A wireless LAN mobile station 1002, such as the one popularly known as a notebook computer, is provided with a wireline LAN interface and a wireless LAN interface. If the user of the mobile station is working at his own desk he would use a wireline LAN network, and if he is in a meeting room he would use a wireless LAN network. During the wireline mode, the wireline LAN interface of the mobile station 1002 is connected to a network switch 1006 through a LAN cable 1005 that is permanently attached to a specified port of the network switch. If database indicating the wiring of the LAN cable to mobile stations within a building is available, the point of attachment of each of such mobile stations can be easily determined by mapping the identities of the mobile stations to the geographic locations of the wires. At the instant the mobile station 1002 is connected to the LAN cable 1005 when the user is seated at his desk, for example, the switch 1004 knows that a mobile station is attached to its specified port, identifies this mobile station and communicates the mobile's identity to a location server 1001.

During the wireless mode, the mobile station 1002 communicates with a base station 1003 through its wireless LAN interface. Whenever the base station 1003 establishes communication with a mobile station, it communicates the identity of the mobile station to the location server 1001 via the network switch 1006.

Since the mobile station 1002 can proceed with wireless communication with the base station 1003, while simultaneously maintaining its wireline connection through the LAN cable 1005, the base station 1003 is able to estimate its distance to the mobile station 1002. Further, it is possible to precisely calculate the geographic distance between these two stations from the geographic location of the mobile station 1002 based on the wiring database of the LAN cable and the geographic location of the base station 1003 based on a database indicating the locations of a plurality of base stations by using the global coordinate systems of latitudes and longitudes.

When a round-trip propagation delay time between the mobile station 1001 and base station 1003 is measured and a wireless distance is calculated from the measured delay time, a distance error associated with the delay time of electronic circuitry is obtained by subtracting the geometric distance from the wireless distance. The distance error obtained in this way is stored in a memory of the location server or base stations. Thereafter, whenever a wireless distance is measured between a mobile station and a base station, the memory is searched for a corresponding distance error to correct the wireless distance.

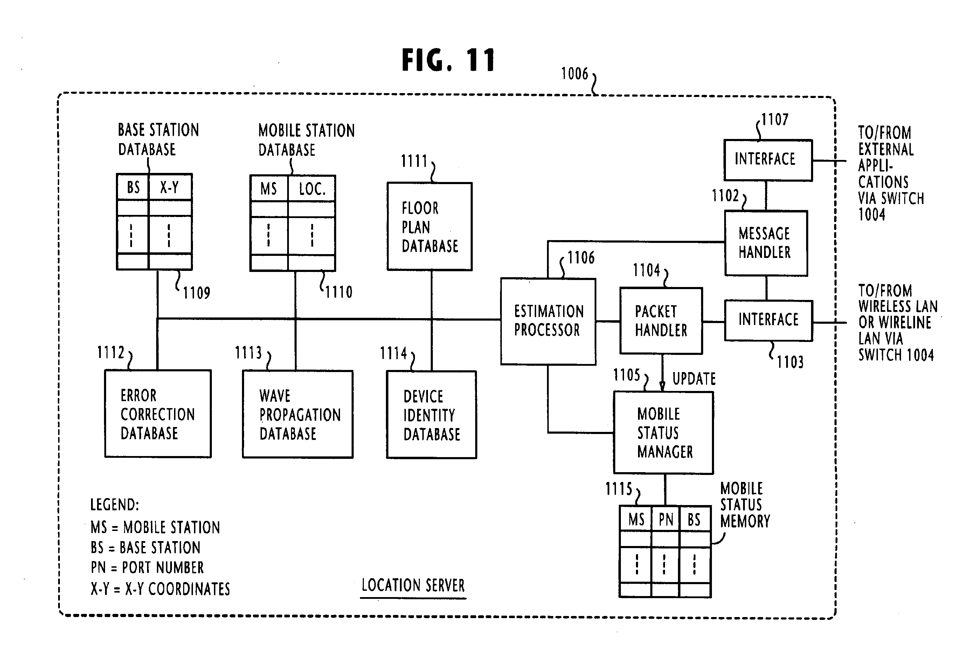

Fig. 11 illustrates one example of the location server 1006 of Fig. 10. Location server 1006 includes a wireline LAN interface 1103 for connection to the wireline LAN network and an external application interface 1107 for connection to external application servers (such as web servers). A message handler 1102 is connected to the interfaces 1103 and 1107 for receiving a location request message from the LAN terminals and/or the application servers, requesting the location information of a target mobile station. The location request message contains the identity of the target mobile station such as IP address or MAC address and may additionally contain desired accuracy (resolution) of the location information. When the location information of a target mobile station is obtained in a manner to be described, the location information is formulated into a report message by the message handler 1102 and transmitted to the requesting source via the interface 1103 or 1107.

Wireline LAN interface 1103 is further connected to a packet handler 1104 which is, in turn, connected to a mobile status manager 1105. Packet handler 1104 assembles a packet for transmission to either a mobile station or a base station through the interface 1103 and disassembles a packet received through the interface 1103.

Whenever the mobile station 1002 of Fig. 10 attaches to the LAN cable 1005 or establishes communication with the base station 1003, the packet handler 1104 receives a packet through the network switch 1006 and examines the packet. If the packet is a location registration message, the packet handler 1104 passes the received packet on to the mobile status manager 1105. Mobile status manager 1105 determines which base station or LAN cable the mobile station 1001 is connected and stores its current status into a mobile status memory 1115. Specifically, if the mobile station 1002 is attached to the LAN cable 1005, the identity (MS) of the mobile station 1001 is mapped to the port number (PN) of the connected LAN cable 1005. If the mobile station 1002 establishes a connection to the base station 1003, the mobile's identity (MS) is mapped to the identity (BS) of this base station. If the location server 1001 is connected to more than one network switch, the mobile identity is mapped to the switch number of its associated network switch.

A location estimation processor 1106 is connected to the message handler 1102, the packet handler 1104 and the mobile status manager 1105. The location estimation processor 1106 is further connected to a plurality of databases 1109 to 1114. Database 1109 is a base station location database in which identities (BS) of a plurality of base stations are mapped to their geographic locations represented by global X-Y co-ordinates of longitudes and latitudes. Database 1110 is a mobile station database which is derived from the above-mentioned wiring data of the LAN cable 1005 and maps mobile identities (MS) to their room numbers and desk locations represented by local X-Y co-ordinates of longitudes and latitudes. Database 1111 is a floor plan database which contains structural information of buildings in which wireless and wireline LAN networks are installed (as described with reference to Fig. 8).

Database 1112 is an error correction database which maintains error data obtained in a manner as described in detail with reference to Figs. 9 and. 10. Database 1113 is a wave propagation database which maintains measurement data indicating wave propagation patterns as described in detail with reference to Figs. 7 and 8. Database 1114 is a device identity database which contains the MAC and IP addresses of mobile and base stations and their manufacturers' identities.

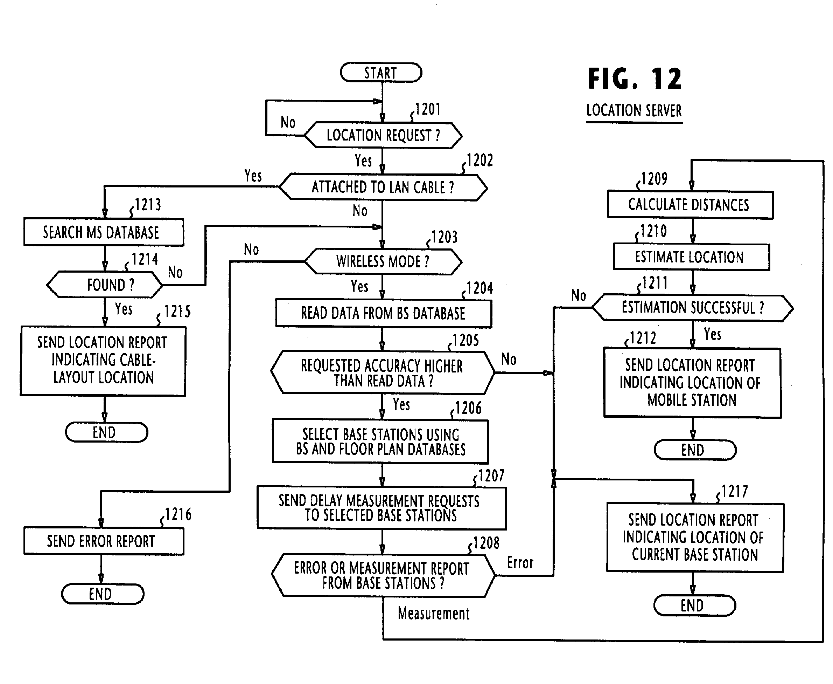

The operation of the location estimation processor 1106 proceeds according to the flowchart of Fig. 12.

When the request message handler 1102 receives a location request message via the interface 1103 or 1107, requesting the location information of a target mobile station, this message is sent to the location estimation processor 1106. When the location estimation processor 1106 receives the location request message (step 1201), it proceeds to decision step 1202 to inquire the mobile status manager 1105 about the current status of the target mobile station. Mobile status manager 1105 makes a search through the mobile status memory 1115 for detecting the mobile identity (MS) of the target station and determines whether the mobile identity (MS) is mapped to a port number (PN) or a base station identity (BS). If the target mobile identity is mapped to a PN, the mobile status manager 1105 determines that the mobile station is currently attached to a LAN cable. Otherwise, it determines that the mobile station is in a wireless mode communicating with a base station. Mobile status manager 1105 informs the location estimation processor 1106 of the detected status of the target mobile station.

If the location estimation processor 1106 determines, at step 1202, that the target mobile station is currently connected to a LAN cable, flow proceeds from step 1202 to step 1213 to makes a search through the mobile station database 1110 for a corresponding entry, using the MS identity of the target mobile station as a search key. If the corresponding entry of the target mobile station is detected (step 1214), the location estimation processor proceeds to step 1215 to read a cable-layout location (local X-Y coordinates) of the target mobile station from the detected entry of database 1110 and instructs the message handler 1102 to send a location report message to the requesting source, indicating the mobile's room number and desk position.

If the decision at step 1202 or 1214 is negative, flow proceeds to decision step 1203 to check to see if the target mobile station is in a wireless mode. If the decision at step 1203 is negative, the location estimation processor proceeds to step 1216 to instruct the message handler 1102 to return an error message to the requesting source. If the target mobile station is in a wireless mode, flow proceeds to step 1204 to read location data from an entry of the base station database 1109 corresponding to the detected BS identity of the mobile status memory.

At decision step 1205, the location estimation processor checks to see if the accuracy of mobile's location requested by the received message is higher than the location of the base station retrieved from the base station database 1109. If the requested accuracy is not higher than the accuracy of mobile's location, the location estimation processor proceeds from step 1205 to step 1217 to instruct the message handler 1102 to formulate and transmit a location report message to the requesting source for indicating the location of the base station currently in communication of the target mobile station. If the decision at step 1205 is affirmative, flow proceeds to step 1206.

In order to estimate the mobile's location a number of base stations are necessary for using them as measurement points to measure their distances to the target mobile station. As described earlier, the number of such base stations may be two or three, depending on their locations. The base station currently in communication with the target mobile station can be used as one of the measurement points. At step 1206, the location estimation processor determines measurement-point base stations by selecting location data from the base station database 1109 and the floor plan database 1111.

At step 1207, the location estimation processor instructs the packet handler 1104 to formulate and transmit propagation delay-time measurement request packets to the selected base stations, requesting each base station to measure the propagation delay time to the target mobile station in a manner as described above. Note that the packet of each measurement request contains the MS identity, the MAC and IP addresses of the target mobile station, and the identity of the wireless channel currently used by the target mobile station.

In addition, each of the measurement requests transmitted from the location server to each measurement-point base station may further include a parameter specifying a time-lapse limit for measurement data previously obtained by the base station with respect to the target mobile station. The time-limit parameter is used by the measurement-point base station as a decision threshold to determine whether the previous data, if present, has lapsed the specified time-lapse limit.

As will be described in detail later, each measurement-point base station responds to the measurement request by measuring its propagation delay time to the target mobile station, and returns a measurement report packet to the location server if the measurement is successful or an error report packet if the measurement fails.

The report packet transmitted from each of the measurement-point base stations is received by the packet handler 1104 and supplied to the location estimation processor 1106 (step 1208). If an error report packet is received, flow proceeds to step 1217 to inform the requesting source of the location of the base station with which the target mobile station is currently in communication. If measurement report packets are received from all the measurement-point base stations, the estimation processor proceeds to step 1209 to read delay time data from the received packets, calculates distances from the base stations to the target mobile station. In this distance calculation process, the error correction database 1112 and device identity database 1114 are used to correct the measured propagation delay time with the stored timing error.

At step 1210, the estimation processor uses the calculated distances as radii of circles to describe these circles and identifies the intersecting point of the circles as an estimated location of the target mobile station. In this location estimation process, the floor plan database 1111 and the wave propagation database are used to identify the mobile's location in a manner as described previously.

If this location estimation process succeeds (step 1211), the location estimation processor proceeds to step 1212 to instruct the message handler 1102 to formulate and transmit a location report message indicating the estimated location of the target mobile station to the requesting source.

If the estimation process fails, flow proceeds from step 1211 to step 1217 to transmit a location report message indicating the location of the base station currently in communication with the target mobile station.

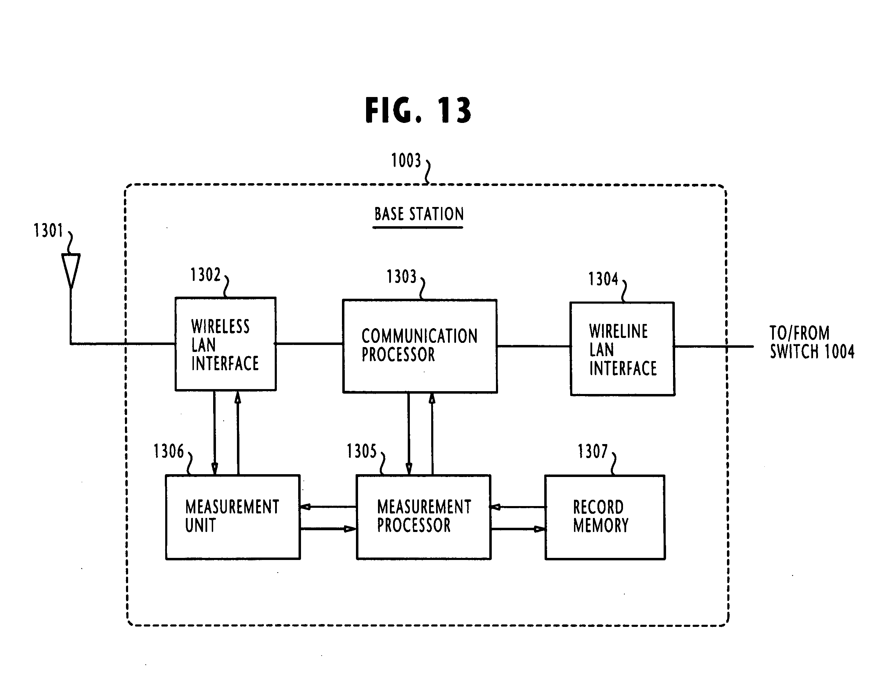

As shown in Fig. 13, each of the base stations selected by the location server for the measurement purpose comprises a communication processor 1303 which establishes a wireless link with the mobile station 1002 through a wireless LAN interface 1302 and antenna 1301 and connects to the switch 1004 through a wireline LAN interface 1304 to establish communication with the location server 1001. A measurement processor 1305 is connected to the communication processor 1303. When the location server transmits a measurement request packet to the base station, the measurement processor 1305 receives it through the wireline interface 1304 and processor 1303 and cooperates with a measurement unit 1306 and a record memory 1307 to process the received packet in a manner to be described. If a propagation delay time has previously been measured with respect to the target mobile station, the result of the measurement and a time stamp indicating the time of day at which the result was obtained are stored as a measurement record in the record memory 1307. Record memory 1307 is searched when the measurement request packet is received. If no reusable record is available, the measurement unit 1306 is instructed to transmit a data packet to the target mobile station via the wireless interface 1302 over the currently using channel to receive an acknowledgment packet and measures the round-trip propagation delay time as discussed above with reference to Figs. 2 to 5. Measurement processor 1305 formulates a measurement report packet for transmission through the processor 1303 and wireline interface 1304 to the location server.

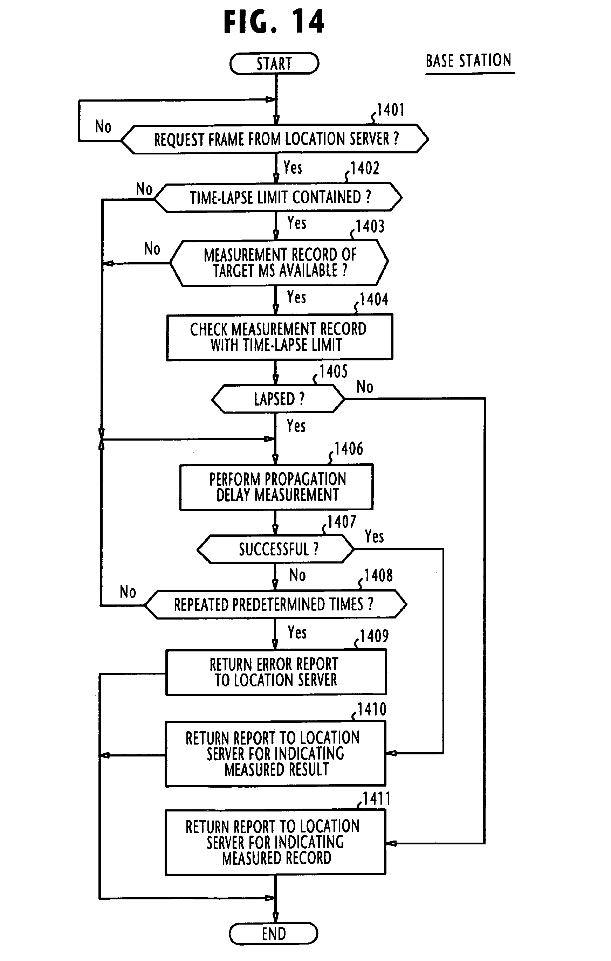

The operation of the measurement processor 1305 of each of the selected base stations proceeds according to the flowchart of Fig. 14.

When the measurement processor 1305 receives a measurement request packet (step 1401), it checks to see if a time-lapse limit parameter is contained in the request packet (step 1402). If the measurement request packet contains a time-lapse limit parameter, the measurement processor searches through the record memory 1307 for a corresponding measurement record (step 1403). If the measurement record of target mobile station is available, the time stamp of the record is checked against the requested value of the time-lapse limit parameter (step 1403) to determine whether the record has lapsed the time-lapse limit (step 1404). If the record has not lapsed the time-lapse limit, the decision is negative at step 1405 and flow proceeds to step 1411 to formulate a measurement report packet with the stored record and transmits the packet to the location server.

If the decision at step 1405 is affirmative, the measurement processor proceeds to step 1406 to instruct the measurement unit 1306 to perform a round-trip propagation delay time measurement by exchanging data and acknowledgment packets with the target mobile station. If an acknowledgment packet is received from the target mobile station, the measurement is successful (step 1407) and flow proceeds to step 1410 to formulate a measurement report packet with the currently obtained result and transmits the packet to the location server.

If the measurement is not successful, step 1406 is performed again until measurement is repeated a predetermined number of times (step 1408). If the decision at step 1408 is affirmative, an error report packet is returned to the location server (step 1409).

If the measurement request packet does not contain a time-lapse limit parameter or a measurement record is not available, flow proceeds from steps 1402 and 1403 to step 1406 to measure the round-trip propagation delay time between the base station and the target mobile station.

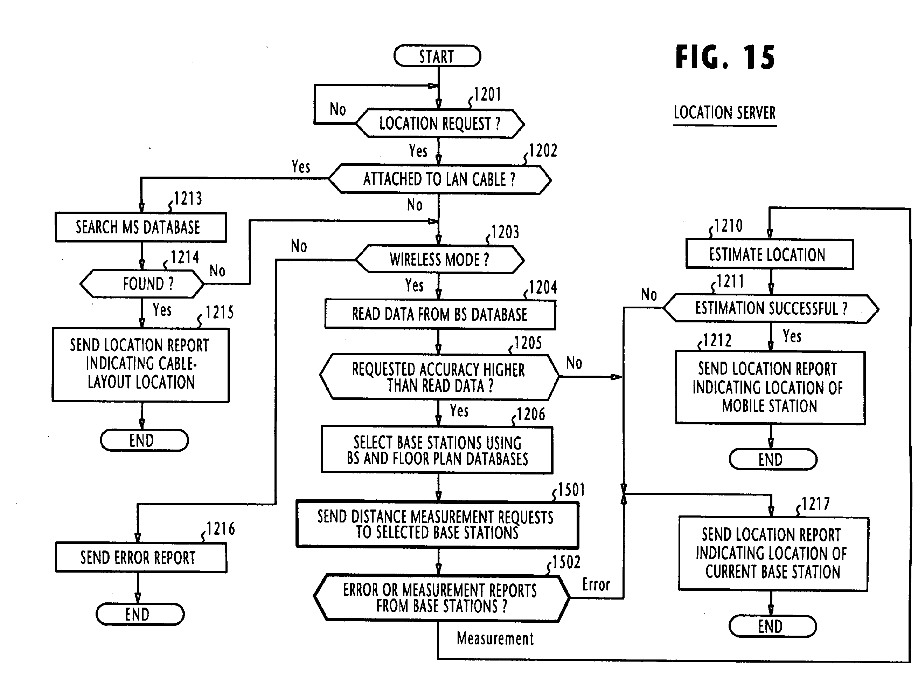

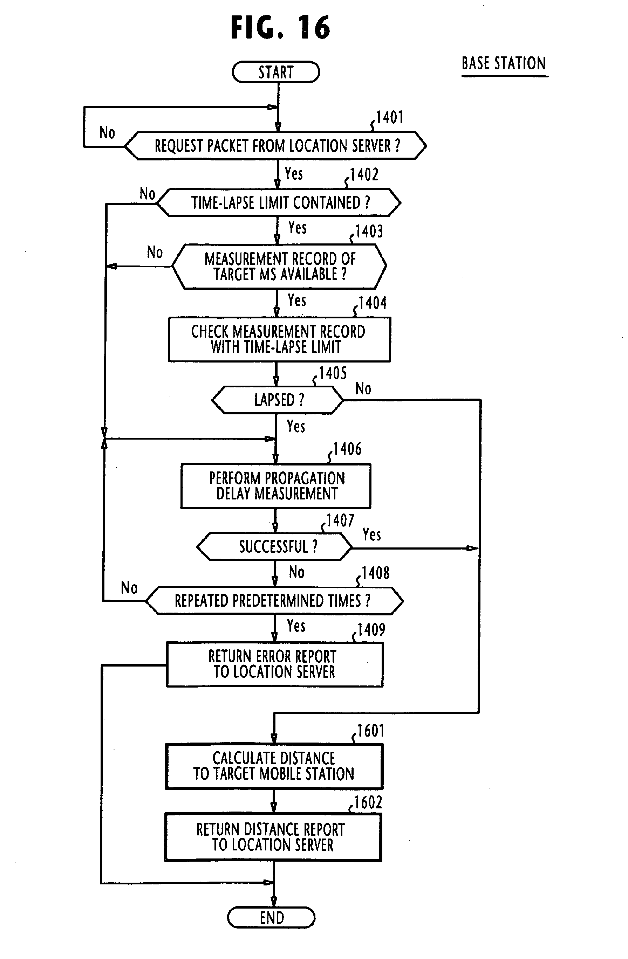

Instead of the delay time measurement, each of the selected base stations is instructed to perform distance calculation and report the calculated distance to the location server as shown in Figs. 15 and 16.

In Fig. 15, steps corresponding in significance to those in Fig. 13 are marked with the same numerals and the description thereof is omitted for simplicity. When the estimation processor selects a number of measurement-point base stations at step 1206, flow proceeds to step 1501 to send a distance measurement request packet to each of the selected base stations and receive report packets from the base stations (step 1502). If an error report is received, flow proceeds to step 1217 to inform the requesting source of the location of the currently communication base station. If distance measurement reports are received, flow proceeds to step 1210 to estimate the location of the target mobile station from the distance data contained in the received packets.

In response to a distance request packet from the location server, each of the selected base stations operates according to the flowchart of Fig. 16 in which parts corresponding to those in Fig. 14 are marked with the same numerals. In Fig. 16, if the measurement record of the target mobile station is reusable (step 1405) or the current measurement is successful (step 1407), flow proceeds to step 1601 to calculate the distance from the base station to the target mobile station and transmit a distance report packet to the location server (step 1602).

Instead of using a number of base stations as discussed above to perform measurements of the propagation delay times and the base-to-mobile distances when the target mobile station is in a wireless mode, the target mobile station can be used to perform these measurements and to perform estimation of the location of the mobile station.

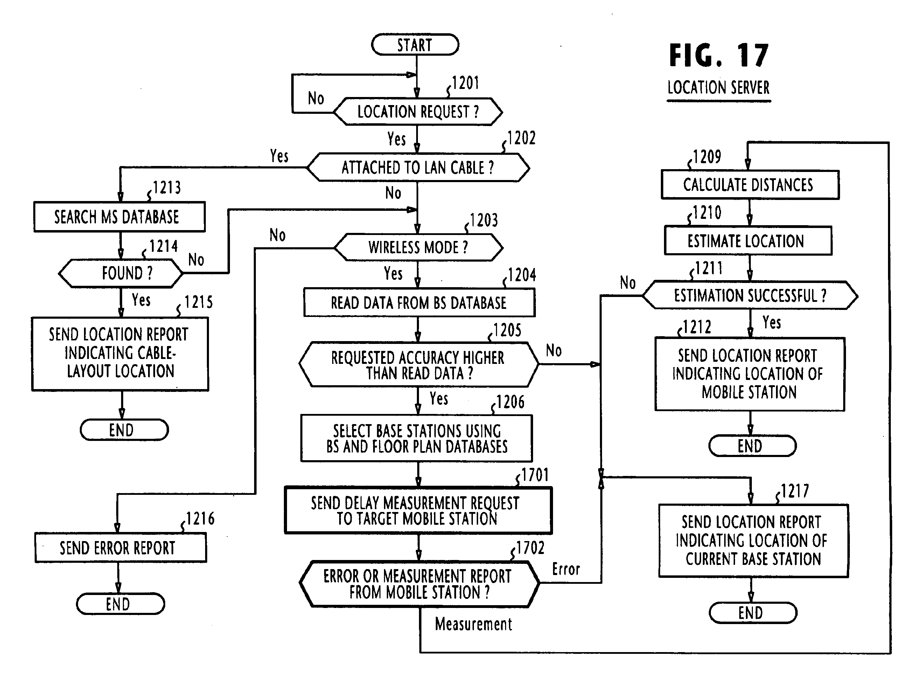

In Fig. 17, when the estimation processor selects a number of base stations at step 1206, flow proceeds to step 1701 to send a propagation delay-time measurement request packet through its wireline interface 1103 to one of the selected base stations. The measurement request packet is relayed by this base station to the target mobile station. The measurement request packet contains the identities (MAC addresses) of the selected base stations and their channel numbers. The location server then receives report packets from the target mobile station, either indicating an error or measured propagation delay times (step 1702). If an error report is received from the mobile station, flow proceeds to step 1217 to inform the requesting source of the location of the base station currently communicating with the mobile station. If the received packet is a measurement report, flow proceeds from step 1702 to step 1209 to use the delay time data to calculate the distances from the mobile station to the selected base stations. The location of the target mobile station is then estimated from the calculated distances at step 1210.

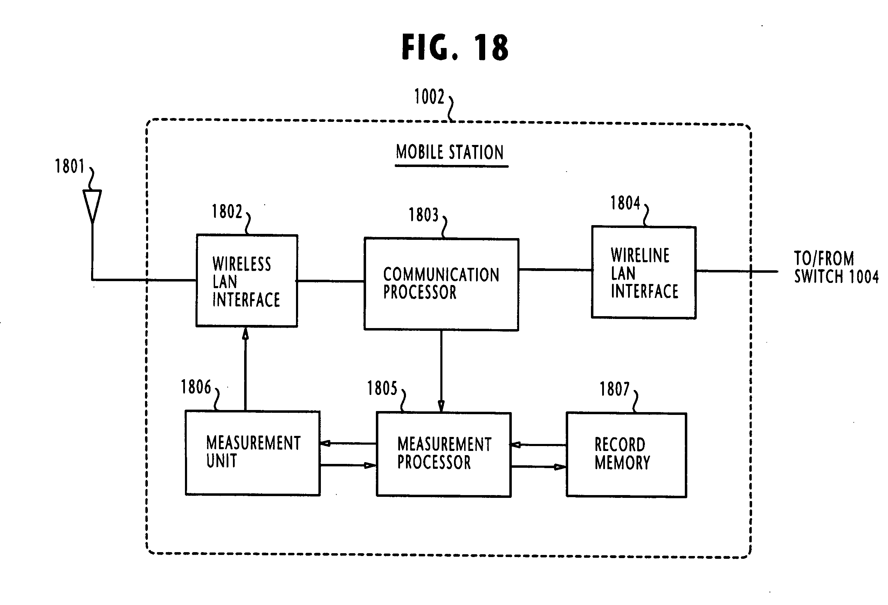

As shown in Fig. 18, the target mobile station comprises a communication processor 1803 which establishes a wireless link with the selected base stations through a wireless LAN interface 1802 and antenna 1801 and can be connected to the switch 1004 through a wireline LAN interface 1804 to communicate with the location server 1001. A measurement processor 1805 is connected to the communication processor 1803. When the location server transmits a measurement request packet to the mobile station, the measurement processor 1805 receives it through the wireless interface 1802 and processor 1803 and cooperates with a measurement unit 1806 and a record memory 1807 to process the received packet in a manner to be described. If the round-trip propagation delay time of the target mobile station has previously been measured, the result of the measurement and a time stamp indicating the time the measurement was made are stored as a measurement record in the record memory 1807. Record memory 1807 is searched when the measurement request packet is received. If no reusable record is available, the measurement unit 1806 is instructed to transmit a data packet to each of the selected base stations via the wireless interface 1802 to receive an acknowledgment packet and measures the round-trip propagation delay times as discussed above with reference to Figs. 2 to 5. Measurement processor 1805 formulates a measurement report packet with the measured results for transmission through the processor 1803 and wireless interface 1802 to the location server.

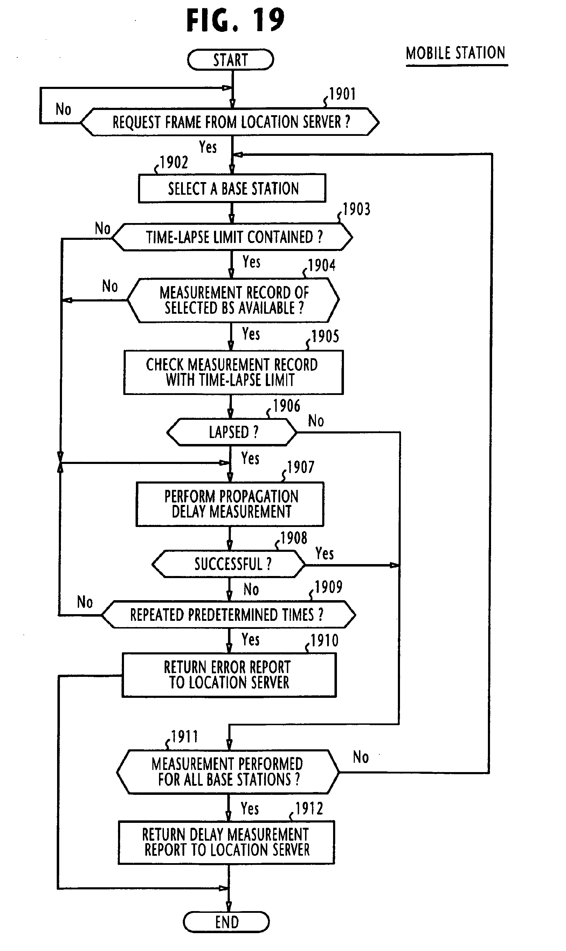

The operation of the measurement processor 1805 of the mobile station proceeds according to the flowchart of Fig. 19.

When the measurement processor 1805 receives a measurement request packet (step 1901) via the wireless interface 1802, the processor selects one of the base stations as specified in the received request packet by the MAC addresses and channel numbers (step 1902) and proceeds to step 1903 to check to see if a time-lapse limit parameter is contained in the request packet. If the measurement request packet contains a time-lapse limit parameter, the measurement processor 1805 searches through the record memory 1807 for a corresponding measurement record (step 1904). If the measurement record of the mobile station is available, the time stamp of the record is checked against the requested value of the time-lapse limit parameter (step 1905) to determine whether the record has lapsed the time-lapse limit (step 1906). If the record has not lapsed the time-lapse limit, flow proceeds to step 1911 to check to see if propagation delay times of all the specified base stations have been obtained. If not, flow returns to step 1902 to select the next base station. If the record has lapsed the time-lapse limit, flow proceeds from step 1906 to step 1907 to measure the round-trip propagation delay time with respect to the currently selected base station. If the measurement is not successful, the decision at step 1908 is negative and the measurement step 1907 is repeated and the number of repeated attempts is counted (step 1909). If measurement is repeated a predetermined number of times, the decision at step 1909 is affirmative and an error report is transmitted from the mobile station to the location server (step 1910). If the measurement is successful, the decision at step 1908 is affirmative and step 1911 is executed.

If the measurement request packet does not contain a time-lapse limit parameter or a measurement record is not available, flow proceeds from steps 1903 and 1904 to step 1907 to measure the propagation delay time between the mobile station and each of the specified base stations.

If propagation delay times of all the base stations have been obtained, flow proceeds from step 1911 to step 1912 to formulate a measurement report packet with the stored record or measured results and transmit the packet to the location server.

Instead of propagation delay time, the location server requests the target mobile station to reply with a distance report.

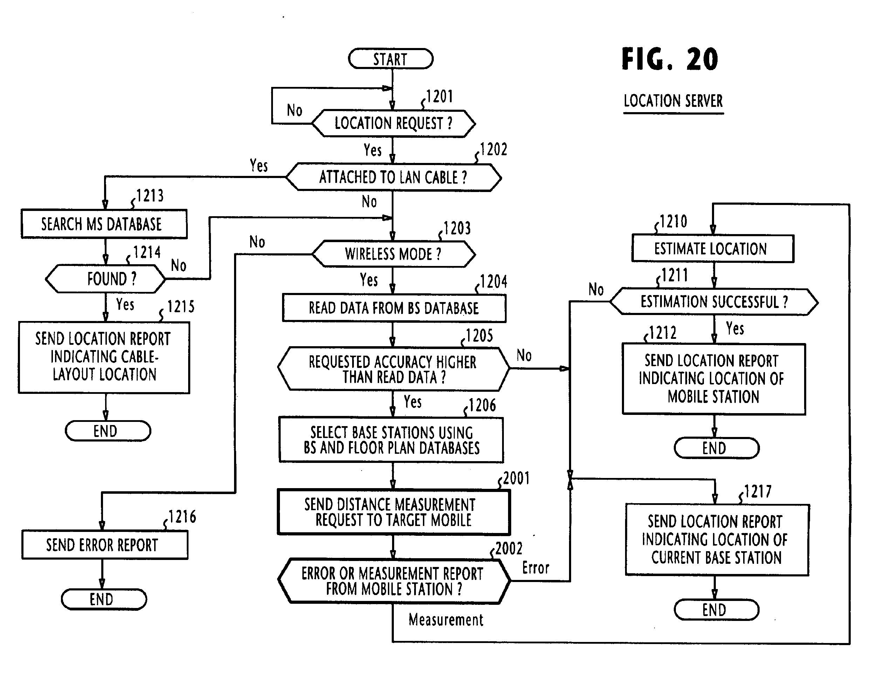

In Fig. 20, when the estimation processor selects a number of measurement-point base stations at step 1206, flow proceeds to step 2001 to send a distance measurement request packet through its wireline interface 1103 to one of the selected base stations for relaying the packet to the target mobile station. The location server then receives report packets from the target mobile station, indicating an error or measured distances (step 2002). If the received packet is an error report, flow proceeds to step 1217. Otherwise, flow proceeds to step 1210 to estimate the location of the target mobile station from the measured distances.

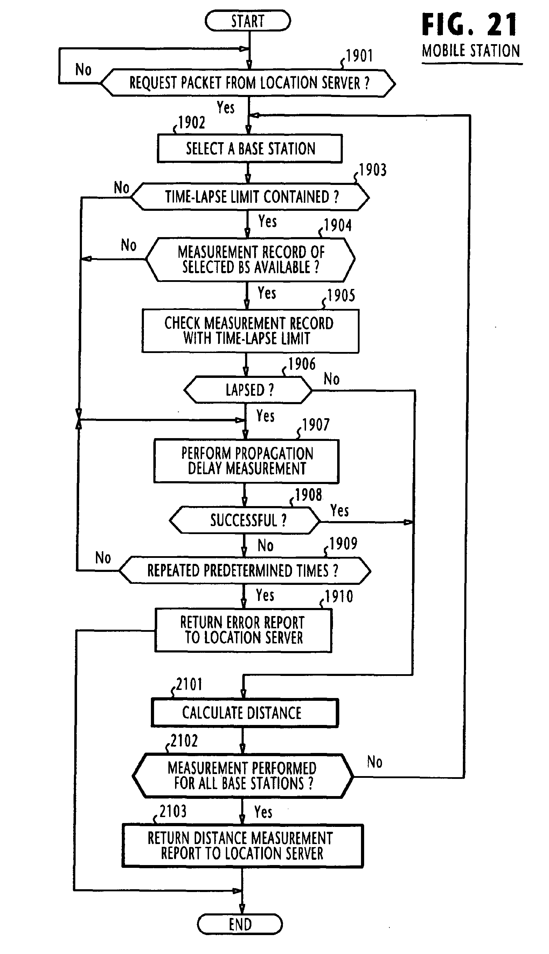

In response to the distance measurement request from the location server, the mobile station operates according to the flowchart of Fig. 21, which is generally similar to that of Fig. 19. If the measurement processor 1805 makes a negative decision at step 1906 or an affirmative decision at step 1908, flow proceeds to step 2101 to calculate a distance from the currently obtained propagation delay time or from a corresponding delay-time record stored in the memory 1807. If distance calculations are performed for all of the specified base stations (step 2102), a distance report packet is formulated and transmitted to the location server (step 2103).

The location of the target mobile station can be identified by the mobile station itself since it can describe a number of circles by using the calculated distances as their radii.

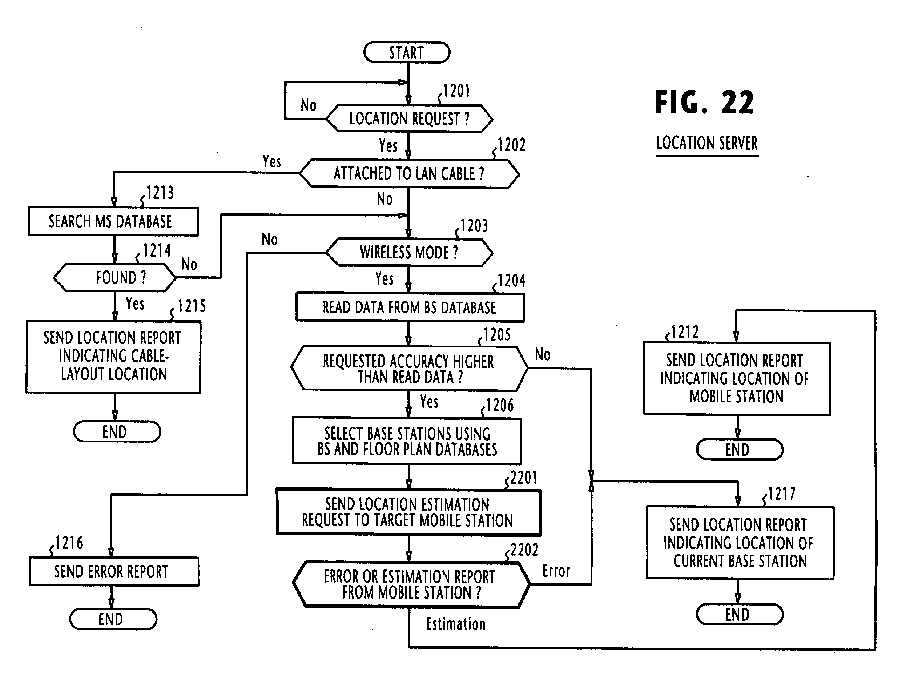

In Fig. 22, when the location server selects a number of base stations as measurement-point base stations at step 1206, flow proceeds to step 2201 to send a location estimation request packet through its wireline interface 1103 to one of the selected base stations. The location estimation request packet is relayed by this base station to the target mobile station. The request packet contains the identities (MAC addresses) of the selected base stations and their channel numbers. The location server then receives report packets from the target mobile station, indicating an error or estimated location of the mobile station (step 2202). If the received packet is an error report, flow proceeds to step 1217. Otherwise, flow proceeds to step 1212 to transmit a location report message to the requesting source, containing the location information estimated by the target mobile station.

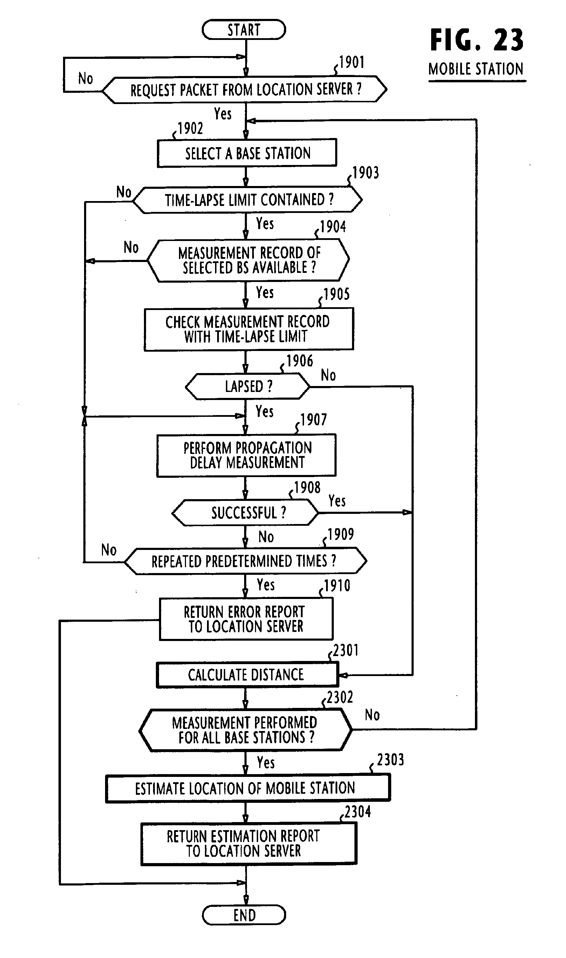

In response to the location estimation request packet received via one of the selected base stations, the mobile station 1002 operates according to the flowchart of Fig. 23, which is generally similar to that of Fig. 19. If the measurement processor 1805 makes a negative decision at step 1906 or an affirmative decision at step 1908, flow proceeds to step 2301 to calculate a distance from the currently obtained propagation delay time or a corresponding delay-time record stored in the memory. If distance calculations are performed for all of the specified base stations (step 2302), the location of the mobile station is estimated from the calculated distances (step 2303) and a location estimation report packet is transmitted to the location server (step 2304).

While mention has been made of embodiments in which the location of a mobile station is estimated, the present invention could equally be as well used for identifying the location of a base station whose location is unknown to the location server. In this case, the location server requests those base stations whose locations are known to exchange asynchronous packets with a base station whose location is unknown and measure the round-trip propagation delay times of the packets.

## Claims

1. A location sensing system comprising:
a plurality of first wireless stations whose locations are known;
means for measuring a plurality of propagation delay times of packets asynchronously transmitted over wireless channels between said wireless stations and a second wireless station whose location is unknown;
means for determining, from said round-trip propagation delay times, a plurality of distances travelled by said packets between said first wireless stations and said second wireless station; and
means for determining the location of said second wireless station from an intersection of a plurality of circles whose radii are equal to said distances and whose centers respectively coincide with the locations of said location-known wireless stations.

2. The location sensing system of claim 1, wherein said measuring means comprises means for measuring a propagation delay time between a source station and a destination station by detecting a start-to-transmit timing of a first packet from said source station, detecting a start-to-receive timing of a second packet arriving at said source station from said destination station as a response to said first packet, and measuring time taken from said start-to-transmit timing to said start-to-receive timing.

3. The location sensing system of claim 2, wherein said measuring means comprises means for subtracting, from said propagation delay time, a first delay time taken by said source station to transmit said first packet and a second delay time taken by said destination station to transmit said second packet in response to said first packet.

4. The location sensing system of claim 1, wherein said measuring means comprises means for measuring a propagation delay time between a source station and a destination station by detecting an end timing of a first packet transmitted from said source station, detecting a start-to-receive timing of a second packet arriving at said source station from said destination station as a response to said first packet, and measuring time taken from said end timing to said start-to-receive timing.

5. The location sensing system of claim 4, wherein said measuring means comprises means for subtracting, from said propagation delay time, a delay time taken by said destination station to transmit said second packet in response to said first packet.

6. The location sensing system of claim 2, wherein said measuring means includes means for retransmitting a copy of said first packet from said source station to said destination station if said first packet is not properly received by said destination station or said second packet is not received by said source station.

7. The location sensing system of claim 1, wherein said measuring means includes means for correcting the measured round-trip propagation delay time with stored error correcting data.

8. The location sensing system of claim 7, wherein said measuring means includes means for correcting the measured round-trip propagation delay time with stored floor-plan data.

9. The location sensing system of claim 7, wherein said measuring means includes means for correcting the measured round-trip propagation delay time with stored wave propagation pattern.

10. The location sensing system of claim 1, wherein said location determining means is responsive to a location request which contains a requested degree of accuracy of the location of said second wireless station, for determining, as the location of said second wireless station, the location of one of said first wireless stations with which the second wireless station is currently in communication if said requested degree of accuracy is lower than a degree of accuracy of the location of said one first wireless station.

11. The location sensing system of claim 1, wherein said location determining means is responsive to a location request which contains a requested degree of accuracy of the location of said second wireless station for determining, as the location of the second wireless station, the location of one of said first wireless stations with which the second wireless station is currently in communication if said requested degree of accuracy is higher than a degree of accuracy of the location of said one first wireless station and if said determining means fails to estimate the location of said second wireless station.

12. The location sensing system of claim 11, wherein said second wireless station includes a wireline interface terminated at a known location, and wherein said location determining means comprises means for determining, as the location of the second wireless station, said known location when the second wireless, station is operating in a wireline mode using said wireline interface.

13. The location sensing system of claim 1, wherein said location determining means is responsive to a location request which contains a requested time-lapse limit of a previously measured round-trip propagation delay time between one of said first wireless stations and said second wireless station, and wherein said measuring means comprises:
means for storing a record indicating said previously measured round-trip propagation delay time of said second wireless station and a time stamp indicating the time the previous measurement was made; and
means for using the stored record if the time stamp of the record indicates that said record has not lapsed the requested time-lapse limit as a measured round-trip propagation delay time between said one first wireless station and said second wireless station.

14. A communication system comprising:
a location server for receiving a location request and transmitting a location report for indicating an estimated location of a target wireless station as a reply to said location request;
a plurality of wireless stations whose locations are known;
first means, responsive to said location request, for measuring a round-trip propagation delay time of packets asynchronously transmitted over a wireless channel between each of said location-known wireless stations and said target wireless station;
second means for determining a plurality of distances from the round-trip propagation delay times; and
third means for estimating the location of said target wireless station from an intersection of a plurality of circles whose radii are equal to said distances and whose centers respectively coincide with the locations of said location-known wireless stations.

15. The communication system of claim 14, wherein each of said location-known wireless stations and said target wireless station are connected to a wireless LAN system.

16. The communication system of claim 14, wherein each of said location-known wireless stations includes said first means, and wherein said location server includes said second and third means.

17. The communication system of claim 14, wherein each of said location-known wireless stations includes said first and second means, and wherein said location server includes said third means.

18. The communication system of claim 14, wherein said target wireless station includes said first means, and wherein said location server includes said second and third means.

19. The communication system of claim 14, wherein said target wireless station includes said first and second means and wherein said location server includes said third means.

20. The communication system of claim 14, wherein said target wireless station includes said first, second and third means.

21. The communication system of claim 14, wherein said first means comprises means for measuring a propagation delay time between a source station and a destination station by detecting a start-to-transmit timing of a first packet from said source station, detecting a start-to-receive timing of a second packet arriving at said source station from said destination station as a response to said first packet, and measuring time taken from said start-to-transmit timing to said start-to-receive timing.

22. The communication system of claim 21, wherein said measuring means comprises means for subtracting, from said propagation delay time, a first delay time taken by said source station to transmit said first packet and a second delay time taken by said destination station to transmit said second packet in response to said first packet.

23. The communication system of claim 14, wherein said first means comprises means for measuring a propagation delay time between a source station and a destination station by detecting an end timing of a first packet transmitted from said source station, detecting a start-to-receive timing of a second packet arriving at said source station from said destination station as a response to said first packet, and measuring time taken from said end timing to said start-to-receive timing.

24. The communication system of claim 23, wherein said first means comprises means for subtracting, from said propagation delay time, a delay time taken by said destination station to transmit said second packet in response to said first packet.

25. The communication system of claim 23, wherein said first means includes means for retransmitting a copy of said first packet from said source station to said destination station if said first packet is not properly received by said destination station or said second packet is not received by said source station.

26. The communication system of claim 21 or 23, wherein said first packet is a data packet and said second packet is an acknowledgment packet.

27. The communication system of claim 21 or 23, wherein said first packet is a broadcast packet and said second packet is a data packet.

28. The communication system of claim 21 or 23, wherein said first packet is a polling packet and said second packet is a data packet.

29. The communication system of claim 14, wherein said first means includes means for correcting the measured round-trip propagation delay time with stored error correcting data.

30. The communication system of claim 14, wherein said first means includes means for correcting the measured round-trip propagation delay time with stored floor-plan data.

31. The communication system of claim 14, wherein said first means includes means for correcting the measured round-trip propagation delay time with stored wave propagation pattern.

32. The communication system of claim 14, wherein said location request contains a requested degree of accuracy of the location of said target wireless station, and wherein said location server comprises means for transmitting said location report for indicating the location of one of said location-known wireless stations with which the target wireless station is currently in communication if said requested degree of accuracy is lower than a degree of accuracy of the location of said one location-known wireless station.

33. The communication system of claim 14, wherein said location request contains a requested degree of accuracy of the location of said target wireless station, and wherein said location server comprises means for transmitting said location report for indicating the location of one of said location-known wireless stations with which the target wireless station is currently in communication if said requested degree of accuracy is higher than a degree of accuracy of the location of said one location-known wireless station and if said third means fails to estimate the location of said target wireless station.

34. The communication system of claim 14, wherein said target wireless station includes a wireline interface terminated at a known location, and wherein said location server comprises means for transmitting said location report for indicating said known location when the target wireless station is operating in a wireline mode using said wireline interface.

35. The communication system of claim 14, wherein said location request contains a requested time-lapse limit of a previously measured round-trip propagation delay time between one of said location-known wireless stations and said target wireless station, and wherein said first means comprises:
means for storing a record indicating said previously measured round-trip propagation delay time of said target wireless station and a time stamp indicating the time the previous measurement was made; and
means for using the stored record if the time stamp of the record indicates that said record has not lapsed the requested time-lapse limit as a measured round-trip propagation delay time between said one location-known wireless station and said target wireless station.

36. A method of sensing the location of a target wireless station in a wireless communication network, wherein the network comprises a plurality of wireless stations of which the locations are known and with which said target wireless station is capable of establishing a wireless channel, the method comprising:
a) receiving a location request;
b) measuring a round-trip propagation delay time of packets asynchronously transmitted over a wireless channel between each of said location-known wireless stations and said target wireless station;
c) determining a plurality of distances from the round-trip propagation delay times;
d) estimating the location of said target wireless station from an intersection of a plurality of circles whose radii are equal to said distances and whose centers respectively coincide with the locations of said location-known wireless stations; and
e) transmitting a location report for indicating the estimated location of said target wireless station as a reply to said location request.

37. The method of claim 36, wherein steps (a), (c), (d) and (e) are performed by a location server and step (b) is performed by each of said location-known wireless stations.

38. The method of claim 36, wherein steps (a), (d) and (e) are performed by a location server and steps (b) and (c) are performed by each of said location-known wireless stations.

39. The method of claim 36, wherein steps (a), (c), (d) and (e) are performed by a location server and step (b) is performed by said target wireless station.

40. The method of claim 36, wherein steps (a), (d) and (e) are performed by a location server and steps (b) and (c) are performed by said target wireless station.

41. The method of claim 36, wherein steps (a) and (e) are performed by a location server and steps (b), (c) and (d) are performed by said target wireless station.

42. The method of claim 36, wherein step (b) comprises the steps of:
detecting a start-to-transmit timing of a first packet from said source station;
detecting a start-to-receive timing of a second packet arriving at said source station from said destination station as a response to said first packet; and
measuring time from said start-to-transmit timing to said start-to-receive timing as said round-trip propagation delay time.

43. The method of claim 42, further comprising the step of subtracting, from said propagation delay time, a first delay time taken by said source station to transmit said first packet and a second delay time taken by said destination station to transmit said second packet in response to said first packet.

44. The method of claim 36, wherein step (b) comprises the steps of:
detecting an end timing of a first packet transmitted from said source station;
detecting a start-to-receive timing of a second packet arriving at said source station from said destination station as a response to said first packet; and
measuring time from said end timing to said start-to-receive timing as said round-trip propagation delay time.

45. The method of claim 44, further comprising the step of subtracting, from said propagation delay time, a delay time taken by said destination station to transmit said second packet in response to said first packet.

46. The method of claim 44, wherein step (b) comprises the step of retransmitting a copy of said first packet from said source station to said destination station if said first packet is not properly received by said destination station or said second packet is not received by said source station.

47. The method of claim 42 or 44, wherein said first packet is a data packet and said second packet is an acknowledgment packet.

48. The method of claim 42 or 44, wherein said first packet is a broadcast packet and said second packet is a data packet.

49. The method of claim 42 or 44, wherein said first packet is a polling packet and said second packet is a data packet.

50. The method of claim 36, wherein step (b) comprises the step of correcting the measured round-trip propagation delay time with stored error correcting data.

51. The method of claim 36, wherein step (b) comprises the step of correcting the measured round-trip propagation delay time with stored floor-plan data.

52. The method of claim 36, wherein step (b) comprises the step of correcting the measured round-trip propagation delay time with stored wave propagation pattern.

53. The method of claim 36, wherein said location request contains a requested degree of accuracy of the location of said target wireless station, and wherein step (e) comprises the step of transmitting said location report for indicating the location of one of said location-known wireless stations with which the target wireless station is currently in communication if said requested degree of accuracy is lower than a degree of accuracy of said location of said one location-known wireless station.

54. The method of claim 36, wherein said location request contains a requested degree of accuracy of the location of said target wireless station, and wherein step (e) comprises the step of transmitting said location report for indicating the location of one of said location-known wireless stations with which the target wireless station is currently in communication if said requested degree of accuracy is higher than a degree of accuracy of said location of said one location-known wireless station and if said third means fails to estimate the location of said target wireless station.

55. The method of claim 36, wherein said target wireless station includes a wireline interface terminated at a known location, and wherein step (e) comprises the step of transmitting said location report for indicating said known location when the target wireless station is operating in a wireline mode using said wireline interface.

56. The method of claim 36, wherein said location request contains a requested time-lapse limit of a previously measured round-trip propagation delay time between one of said location-known wireless stations and said target wireless station, and wherein step (b) comprises the steps of:
storing a record indicating said previously measured round-trip propagation delay time of said target wireless station and a time stamp indicating the time the previous measurement was made,
using the stored record if the time stamp of the record indicates that said record has not lapsed the requested time-lapse limit as the measured round-trip propagation delay time between said one location-known wireless station and said target wireless station.
